# EUROPEAN PATENT SPECIFICATION

(11) **EP 0 373 616 B1**
(45) Date of publication and mention of the grant of the patent: **15.09.1993**
(21) Application number: 89123024.5
(22) Date of filing: 13.12.1989
(51) Int. Cl.: B60K 17/10, F16H 47/02

(54) **Hydraulically operated power transmission apparatus**
Hydraulisch betriebenes Getriebe
Boîte de vitesse actionnée hydrauliquement

(30) Priority: 13.12.1988 JP 314576/88; 28.02.1989 JP 22530/89 U; 18.04.1989 JP 45214/89
(43) Date of publication of application: 20.06.1990
(73) Proprietor: HONDA GIKEN KOGYO KABUSHIKI KAISHA, Minato-ku, Tokyo (JP)
(72) Inventor: Nishimura, Sadanori, Omiya-shi Saitama (JP); Makita, Hiroshige, Niiza-shi Saitama (JP); Ishimoto, Makiro, Kawagoe-shi Saitama (JP); Kawai, Atsuyoshi, Fujimi-shi Saitama (JP); Ninomiya, Makoto, Shiki-shi Saitama (JP)
(74) Representative: Melzer, Wolfgang, Dipl.-Ing.

(56) References cited:
- FR-A- 2 610 875
- PATENT ABSTRACTS OF JAPAN vol. 13, no. 52 (M-794) 07 February 1989, & JP-A-63 258220 (KANZAKI) 25 October 1988,

## Description

The present invention relates to a hydraulically operated power transmission apparatus having a hydraulically operated transmission mechanism and a differential mechanism.

Some known power transmission apparatus for use on riding-type working machines such as tractors include a hydraulically operated transmission mechanism having a hydraulic pump and a hydraulic motor which era interconnected by hydraulic passages and operable to continuously vary the transmission ratio or speed reduction ratio.

Power transmission apparatus comprising the hydraulically operated transmission mechanism of the type described above and a mechanical differential are disclosed in Japanese Laid-Open Utility Model Publications Nos. 61(1986)-139821 and 61(1986)-139822 and Japanese Laid-Open Patent Publication No. 63(1988)-258220, for example.

In the power transmission apparatus disclosed in Japanese Laid-Open Utility Model Publications Nos. 61(1986)-139821 and 61(1986)-139822, the hydraulically operated transmission mechanism and the differential mechanism are disposed independently of each other. Since the transmission and differential mechanisms have respective casings, the number of parts used is large, and the power transmission apparatus is large in size.

The power transmission apparatus disclosed in Japanese Laid-Open patent Publication No. 63(1988)-258220 is also large in size and cannot easily be disassembled and assembled because the pump drive shaft of the hydraulic pump is positioned remotely from the hydraulic motor and extends perpendicularly to the output shaft of the hydraulic motor and the output shaft extending from the differential mechanism,

When the motor vehicle incorporating the above conventional hydraulically operated transmission apparatus runs downhill, the output shaft of the hydraulic motor is forcibly driven by the road wheels of the motor vehicle, applying forces to the swash plate of the hydraulic pump in a direction away from the neutral position. Then, a link mechanism coupled to the swash plate is released from a tension, and the swash plate tends to wobble about its pivot shafts for thereby allowing the speed of the motor vehicle to become unstable.

It is the object of the present invention to provide a hydraulically operated power transmission apparatus which include a hydraulic motor, a hydraulic pump, a differential mechanism, and a charging pump that are disposed in a compact arrangement, thus making the apparatus smaller in size, and which can easily be assembled, maintained, and serviced. To this end, a hydraulically operated power transmission apparatus in accordance with the present invention is characterised by the features specified in claim 1. A hydraulic pump, a hydraulic-motor, and a differential mechanism are disposed in the closed space. The pump drive shaft of the hydraulic pump, the output shaft of the hydraulic motor, and an output shaft of the differential mechanism have ends rotatably supported by the base plate, whereas the other ends thereof are rotatably supported by the casing.

According to a preferred arrangement of the present invention, a cover is attached to an outer surface of the base plate through a sealing member. The cover has a charging pump housing which accommodates an oil charging pump and a seal member providing a seal between the output shaft of the differential mechanism and the transmission case.

A swash plate stabilizer for pushing back the swash plate of the hydraulic pump to a neutral position is provided to prevent the swash plate from wobbling when a motor vehicle incorporating the power transmission apparatus runs downhill.

The above and further objects, details and advantages of the present invention will become apparent from the following detailed description of preferred embodiments thereof, when read in conjunction with the accompanying drawings.
FIG. 1 is a plan view, partly broken away, of a riding-type lawn mowing machine incorporating a hydraulically operated power transmission apparatus according to an embodiment of the present invention;
FIG. 2 is an enlarged cross-sectional view of the hydraulically operated power transmission apparatus on the lawn mower shown in FIG. 1;
FIG. 3 is a side elevational view of a riding-type lawn mowing machine having a hydraulically operated power transmission apparatus according to another embodiment of the present invention;
FIG. 4 is a plan view of the riding-type lawn mowing machine shown in FIG. 3, with a body omitted from illustration;
FIG. 5 is an enlarged cross-sectional view of the hydraulically operated power transmission apparatus on the mawing machine shown in FIG. 3;
FIG. 6 is a fragmentary cross-sectional view showing a swash plate stabilizer in the hydraulically operated power transmission apparatus shown in FIG. 5;
FIG. 7 is a graph showing the relationship between the gradient of a sloping road and the pressure in a hydraulic passage;
FIG. 8 a is a cross-sectional view taken along line VIII - VIII of FIG. 6;
FIG. 9 is a front elevational view of a cylinder plate, as viewed from a swash plate, interposed between a cylinder block and a base plate; and
FIG. 10 is an enlarged cross-sectional view of another swash plate stabilizer.

Like or corresponding parts are denoted by like or corresponding reference numerals throughout views.

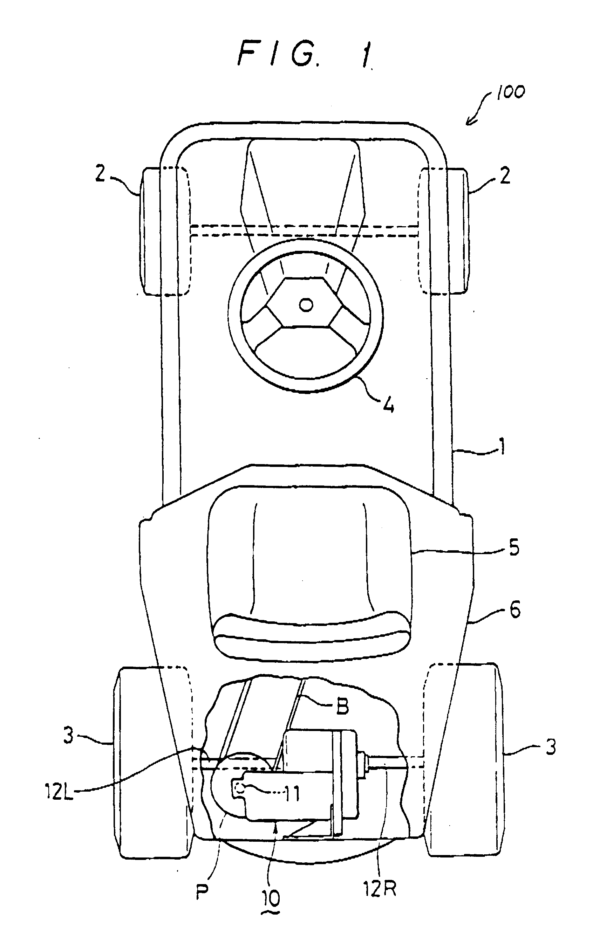

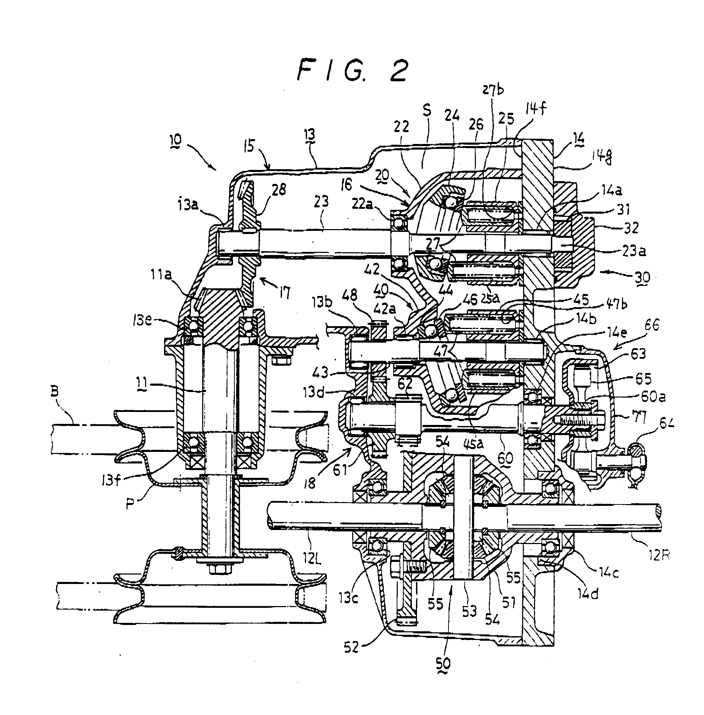

FIGS. 1 and 2 show a hydraulically operated power transmission apparatus according to an embodiment of the present invention.

As shown in FIG. 1, a riding-type lawn mowing machine 100 includes a frame 1 on which front and rear road wheels 2, 3 are rotatably mounted at front and rear portions thereof. The mowing machine 100 also has a steering wheel 4 on the front portion of the frame 1, and a driver's seat 5 on its central portion. The rear portion of the lawn mower 100 is covered with a body 6 with a hydraulically operated power transmission apparatus 10 disposed therebelow. The power produced by an engine disposed in the body is transmitted by a belt B to a pulley P mounted on an input shaft 11 of the power transmission apparatus 10, which changes the speed of the transmission power and rotates output shafts 12R, 12L to drive the rear road wheels 3.

As illustrated in FIG. 2, the power transmission apparatus 10 has a transmission case 15 comprising a casing 13 having an opening in one side thereof, and a base plate 14 attached to the open side of the casing 13 in closing relation to the opening. The transmission case 15 thus defines a closed space S therein which accommodates a hydraulic pump 20, the hydraulic motor 40, and a differential mechanism 50. The base plate 14 is of a substantially uniform thickness and has a flat inner attachment surface 14f surrounded by the casing 13 and a flat outer attachment surface 14g which is exposed outwardly.

The input shaft 11 is rotatably supported in the casing 13 by bearings 13e, 13f and has one end projecting out of the casing 13 with the pulley P mounted on the projecting end. A bevel gear 11a is fixed to the other end of the input shaft 11 and held in mesh with another bevel gear 28 fixed to an end of a pump drive shaft 23 by a key. The input shaft 11 extends perpendicularly to the pump drive shaft 23. Therefore, rotation of the input shaft 11 is transmitted to the pump drive shaft 23 while the direction of the rotational axis is being 90° bent by a direction changing mechanism 17 which comprises the bevel gears 11a, 28.

The hydraulic pump 20 is in the form of a swashplate variable-displacement axial-piston pump. The hydraulic pump 20 comprised the pump drive shaft 23, a cylinder block 25 splined over the pump drive shaft 23 for rotation therewith, a plurality of cylinders 25a defined in the cylinder block 25 concentrically around the pump drive shaft 23, a swash plate 24 having a thrust bearing 26 and angularly movable, a plurality of pistons 27 fitted respectively in the cylinders 25a and reciprocally movable in abutting contact with the thrust bearing 26 of the swash plate 24, and a pump case 22 housing these pump components and secured to the inner attachment surface 14f of the base plate 14.

The pump case 22 is integral with a motor case 42 (described later), and they jointly serve as an inner case 16.

The pump drive shaft 23 has a lefthand end (as viewed in FIG. 2) rotatably supported in the casing 13 by a bearing 13a, an intermediate portion rotatably supported in the pump case 22 by a bearing 22a, and a righthand end rotatably supported in the bass plate 14 by a bearing 14a and projecting as an end 23a out of the base plate 14.

An oil charging pump 30 comprises a trochoid pump having a rotor 31 in the form of a trochoid gear fixedly mounted on the projecting end 23a of the pump drive shaft 23 and a charging pump case 32 mounted on the outer attachment surface 14g of the base plate 14. The oil charging pump 30 supplies working oil to an inlet port (not shown) of the hydraulic pump 20.

The hydraulic motor 40 is in the form of a fixed-swash-plate axial-piston motor. The hydraulic motor 40 comprises a motor case 42 fixed to the inner attachment surface 14f, an output shaft 43 extending through the motor case 42, a swash plate 44 fixedly attached to the motor case 42 at an angle to the axis of the output shaft 43, a cylinder block 45 splined over the output shaft 43 for rotation therewith, and a plurality of pistons 47 fitted respectively in cylinders 45a defined in the cylinder block 45 and reciprocally movable while sliding on a thrust bearing 46 of the swash plate 44. The base plate 14 has hydraulic passages (not shown) defined therein and communicating between the cylinders 25a of the hydraulic pump 20 and the cylinders 45a of the hydraulic motor 40. The hydraulic motor 40 is rotated by a hydraulic pressure produced by the hydraulic pump 20.

The output shaft 43 of the motor 40 has a lefthand end (as viewed in FIG. 2) rotatably supported in the casing 13 by a bearing 13b, an intermediate portion rotatably supported in the motor case 42 by a bearing 42a, and a righthand end rotatably supported in the base plate 14 by a bearing 14b.

The differential mechanism 50 is disposed below the hydraulic motor 40. The differential mechanism 50 is in the form of a mechanical differential which comprises a differential case 51, a spur gear 52 mounted on the differential case 51, a pinion shaft 53 supported by the differential case 51, a pair of pinions 54 mounted on the pinion shaft 53, a pair of side gears 55 held in mesh with the pinions 54, and the output shafts 12R, 12L connected respectively to the side gears 55.

The differential case 51 has a righthand end (as viewed in FIG. 2) rotatably supported by a bearing 14d which is mounted in the base plate 14 by a bearing box 14c, and a lefthand end rotatably supported by the casing 13 by a bearing 13c.

Between the differential mechanism 50 and the hydraulic motor 40, there is disposed a countershaft 60 on which there is fixedly mounted a larger gear 61 held in mesh with a gear 48 fixed to the motor output shaft 43. A smaller gear 62 fixedly mounted on the countershaft 60 is held in mesh with the spur gear 52 of the differential mechsanism 50. These gears 48, 61, 62, 52 and the countershaft 60 jointly serve as a speed reducer gear mechanism, i.e., a countershaft transmission mechanism 18. The countershaft 60 is supported by a bearing 13d mounted in the transmission case 13 and a bearing 14e mounted in the base plate 14.

The countershaft 60 has a righthand end (as viewed in FIG. 2) projecting as an end 60a out of the base plate 14, and a brake 66 for braking the countershaft 60 is mounted on the projecting end 60a of the countershaft 60. The brake 66 comprises a brake drum 63 fixed to the projecting end 60a, a brake shoe 65 disposed in the brake drum 63, a link 64 operatively coupled to the brake shoe 65, and a lid 77 housing the brake drum 63 and attached to the outer attachment surface 14g. When the link 64 is angularly moved, the brake shoe 65 is moved radially outwardly into frictional engagement with the brake drum 63 to brake the countershaft 60 against rotation about its own axis.

The brake 66 may be mounted on the motor output shaft 43, rather than on the countershaft 60.

The pump drive shaft 23, the motor output shaft 43, the countershaft 60, and the output shafts 12R, 12L of the differential mechanism 50 lie parallel to each other, with the input shaft 11 extending perpendicularly to these shafts. Only the input shaft 11 and the output shafts 12R, 12L coupled to the rear road wheels 3 project from the hydraulically operated power transmission apparatus 10.

The power transmission apparatus 10 is assembled as follows:
The bearings 14a, 14b are fitted in the base plate 14, and the end 23a of the pump drive shaft 23 is inserted through the bearing 14a whereas the motor output shaft 43 is inserted through the bearing 14b. The inner case 16 is attached to the inner attachment surface 14f of the base plate 14, thus installing the hydraulic pump 20 and the hydraulic motor 40 an the inner attachment surface 14f.

Then, the trochoid gear 31 of the oil charging pump 30 is mounted on the projecting end 23a of the pump drive shaft 23, and the charging pump case 32 is attached to the outer attachment surface 14g of the base plate 14, so that the oil charging pump 30 is completed.

The hydraulic pump 20, the oil charging pump 30, and the hydraulic motor 40 may now be tested for their operation to ascertain whether the hydraulically operated power transmission apparatus composed of the hydraulic passages (not shown) in the base plate 14, the hydraulic pump 20, the hydraulic motor 40, and the oil charging pump 30 operate satisfactorily or not.

Thereafter, the bearing 14e is fitted in the base plate 14, the end 60a of the countershaft 60 is inserted through the bearing 14e, and the brake drum 63 is installed on the projecting end 60a. The lid 70 with the link 64 and the brake shoe 65 coupled thereto is affixed to the base plate 14.

The bearing box 14c with the bearing 14d fitted therein is attached to the base plate 14, and the output shaft 14R of the differential mechanism 50 is inserted through the bearing 14d.

At this time at the latest, the base plate 14 is horizontally held with the inner attachment surface 14f facing upwardly. Now, the pump drive shaft 23, the motor output shaft 43, the output shaft 12L, and the countershaft 60 extend parallel to each other vertically on the base plate 14.

The bevel gear 28 is mounted on the pump drive shaft 23, and the gear 48 is mounted on the motor output shaft 43. The meshing condition between the gear 48 and the larger gear 61 on the countershaft 60 is adjusted, and the meshing condition between the smaller gear 62 on the countershaft 60 and the spur gear 52 is adjusted.

The casing 13 with the input shaft 12 installed thereon is carefully placed over the base plate 14 with the above shafts vertically mounted thereon. The upper ends of the shafts are fitted respectively in the bearings 13a through 13d in the casing 13, after which the casing 13 and the base plate 14 are coupled to each other into the transmission case 15. The power transmission apparatus 10 is now completed.

The differential mechanism 50 and the intermediate transmission mechanism 18 can be inspected and serviced simply when the casing 13 is removed.

The above process of assembling the power transmission mechanism 10 is for illustrative purpose only. The power transmission mechanism 10 may be assembled in any of various different ways.

Operation of the power transmission apparatus 10 will be described below.

Rotative power from the engine is applied from the pulley P to the input shaft 11 to rotate the pump drive shaft 23. The pistons 27 of the hydraulic pump 20 draw oil and feed oil under pressure to the hydraulic motor 40. The oil supplied to the hydraulic motor 40 reciprocally moves the pistons 47 thereof for thereby rotating the motor output shaft 43. At this time, the oil charging pump 30 draws oil from within the transmission case 15 and supplies it through the oil passages in the base plate 14 to the hydraulic pump 20.

The motor output shaft 43 may be selectively rotated, reversed, and stopped by varying the angle of inclination of the swash plate 24 of the hydraulic pump 20.

The rotation of the motor output shaft 43 is transmitted through the countershaft transmission mechanism 18 to the differential mechanism 50, which rotates the output shafts 12R, 12L to move the lawn mower 100 forwardly or rearwardly.

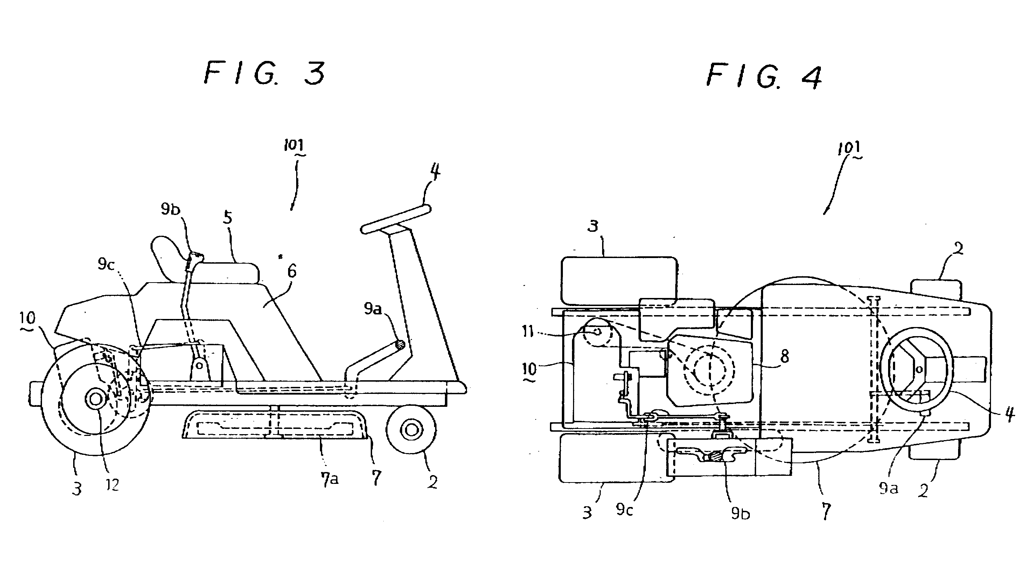

A hydraulically operated power transmission apparatus according to another embodiment of the present invention will be described below with reference to FIGS. 3 through 5.

As shown in FIG. 3, a cutter housing 7 is disposed below a body 6 of a riding-type lawn mowing machine 101, and an engine 8 and a hydraulically operated power transmission apparatus 10 are disposed below a driver's seat 5.

Power from the engine 8 is transmitted through the power transmission apparatus 10 to rear road wheels 3, and is also transmitted to rotate a cutter blade 7a in the cutter housing 7, so that the mowing machine 101 cuts off grass while moving at a low speed.

The mowing machine 101 also has a brake pedal 9a, a shift lever 9b for controlling the power transmission apparatus 10 to change the speed and direction of travel of the mowing machine 101, and a link mechanism 9c operatively interconnecting the shift lever 9b and the power transmission apparatus 10.

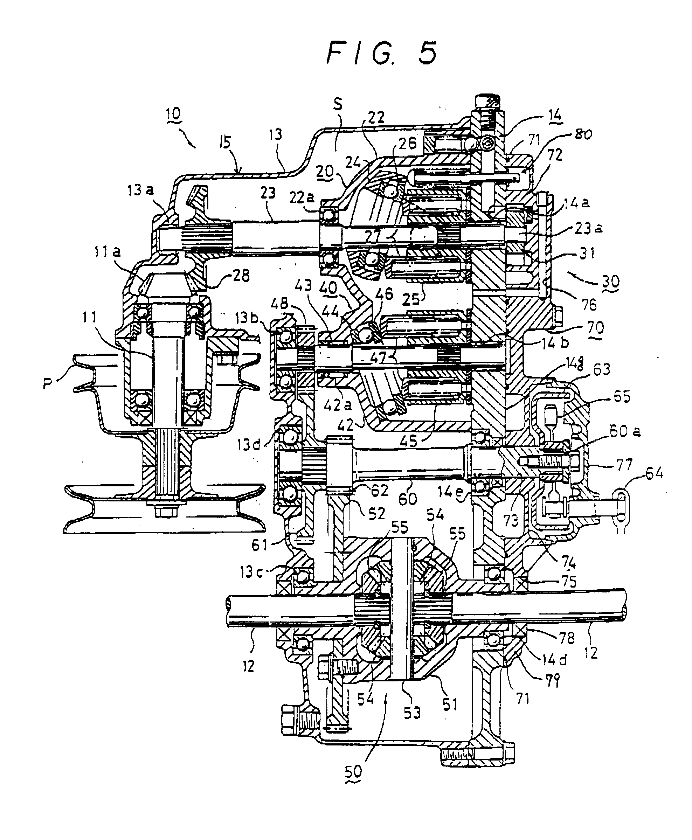

As shown in FIG. 5, a cover 70 is attached to the flat outer attachment surface 14g of the base 14 with a sealing member 71 such as an O-ring interposed therebetween.

The cover 70 is in the form of a unitary block which comprises a charging pump housing 72 which accommodates the rotor 31 of the oil charging pump 30, a brake housing 74 having a hole 73 through which the countershaft extends, end an output shaft sealing portion 79 having a hole 75 through which the output shaft 12R extends.

The charging pump housing 72 of the cover 70 has an oil inlet passage 76 defined therein and providing communication between the closed space S in the transmission case 15 and the charging pump 30. A lid 77 is attached to the brake housing 74. A sealing member 78 is fitted in the hole 75. The sealing member 78 is preferably in the form of an oil seal, and seals between the output shaft 14R and the cover 70 to prevent oil from leaking from within the closed space S.

In this embodiment, the righthand end of the differential case 51 is rotatably supported in the base plate 14 by the bearing 14d mounted directly in the base plate 14.

To assemble the power transmission apparatus 10 shown in FIG. 5, the hydraulic pump 20, the hydraulic motor 40, the countershaft 60, and the differential mechanism 50 are mounted on the base plate 14 in the same manner as with the first embodiment, and then they are covered with the casing 13 which is subsequently joined to the base plate 14.

Then, the rotor 31 of the charging pump 30 is mounted on the projecting end 23a of the pump drive shaft 23, and thereafter the countershaft 60 is inserted through the hole 73. The cover 70 is mounted on the outer attachment surface 14g of the base plate 14 through the sealing member 71 while the output shaft 12R is inserted through the seal member 78.

The charging pump 30 and the bearing 14d for the output shaft 12 can be inspected and serviced simply when the single cover 70 is removed.

The hydraulically operated power transmission apparatus includes a swash plate stabilizer 80.

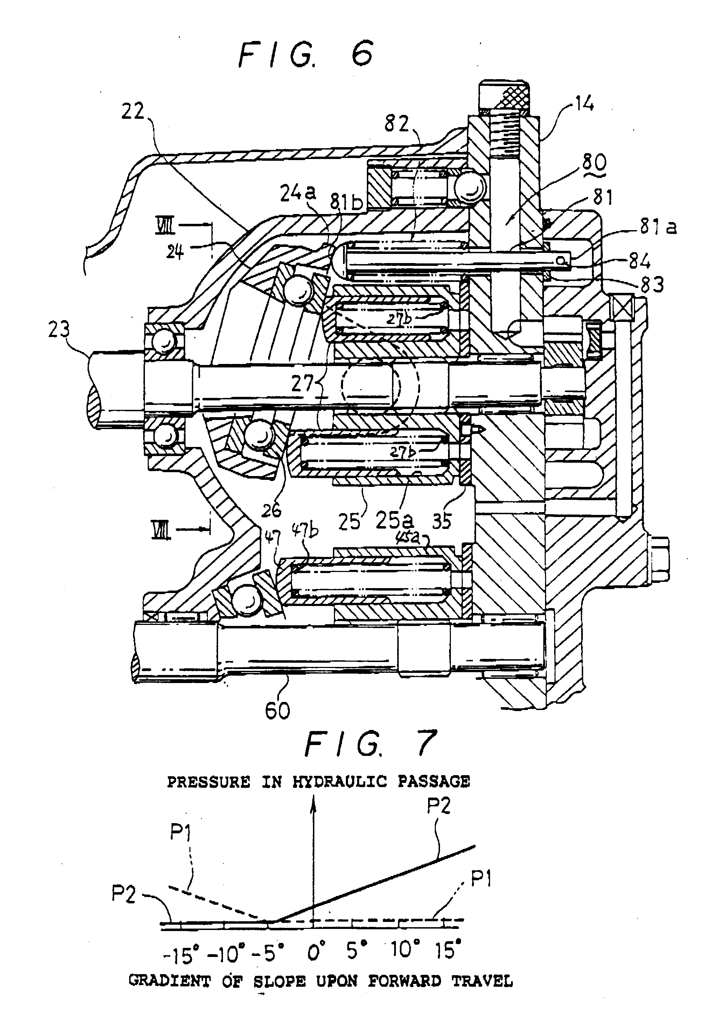

The swash plate stabilizer 80 will be described below with reference to FIGS. 6 through 8.

As shown in FIG. 6, the swash plate stabilizer 80 comprises a pusher rod 81 extending through the base plate 14 parallel to the pump drive shaft 23, and a spring 82 for normally urging the pusher rod 81 toward the pump swash plate 24.

The pusher rod 81 has an inner end 81b held against an upper edge 24a of the swash plate 24 and an outer end 81a supporting a washer 83 and a pin 84 for limiting the movement of the pusher rod 81 through the base plate 14 to the left. The pin 84 is positioned such that when the swash plate 24 is turned counterclockwise (FIG. 6) into a neutral position in which the thrust bearing 26 lies parallel to the base plate 14, the inner end 81b of the pusher rod 81 is slightly spaced from the swash plate 24. The washer 83 and the pin 84 may be replaced with a lock nut on the outer end 81a for keeping the pusher rod 81 from removal.

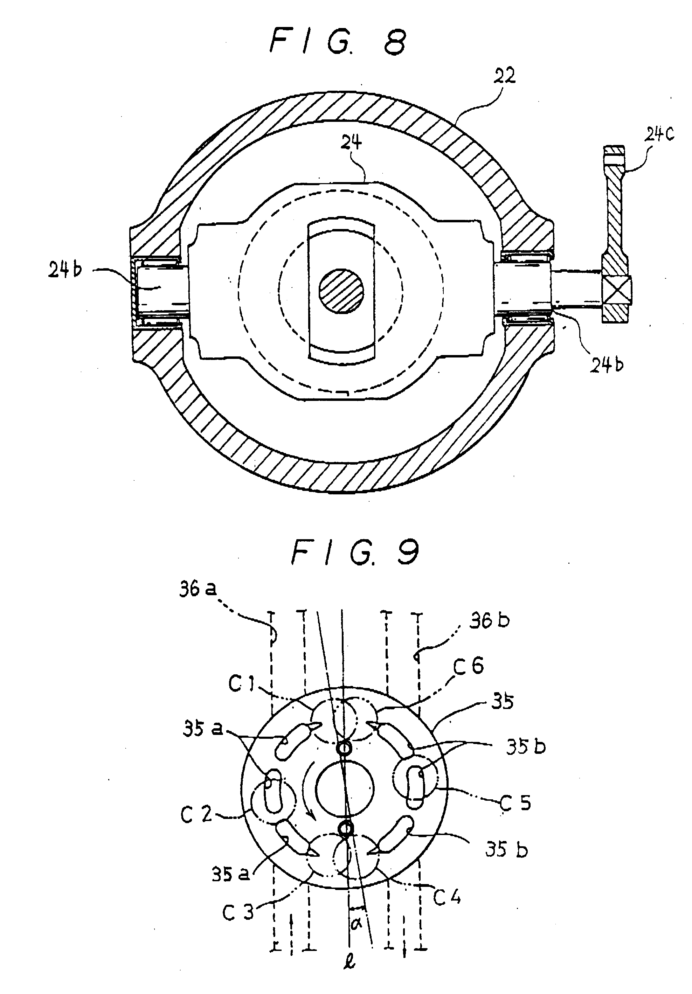

As shown in FIG. 8, pivot shafts 24b attached to the swash plate 24 are rotatably supported in the pump case 22, and a lever 24c is fixed to one of the pivot shafts 24b. Therefore, the swash plate 24 can be tilted by angularly moving the lever 24c. The lever 24c is coupled to the link mechanism 9c shown in FIG. 3, so that the swash plate 24 can be tilted under remote control by operating the shift lever 9b.

FIG. 9 shows a cylinder plate 35, as viewed from the side of the swash plate 24, interposed between the cylinder block 25 and the base plate 14 shown in FIG. 6. The cylinder plate 35 has first and second ports 35a, 35b defined therein and held in communication with first and second hydraulic passages 36a, 36b, respectively, which are defined in the base plate 14.

When the cylinder block 25 rotates counterclockwise, for example, with the pump drive shaft 23 with respect to the cylinder plate 35, the cylinders 25a move successively from a position C1 to a position C2 to a position C3 to a position C4 to a position C5 to a position C6 back to the position C1. At this time, the pistons 27 in the respective cylinders 25a move in abutting engagement with the slanted surface of the swash plate 24. More specifically, when the pistons 27 are positioned on the lefthand side of the vertical central line ℓ of the cylinder plate 35, they move forwardly out of the cylinders 24a, and when the pistons 27 are positioned on the righthand side of the vertical central line ℓ they move rearwardly back into the cylinders 24a.

The cylinders 25a start drawing oil from the first hydraulic passage 36a in the position C1, and stop drawing soil in the position C3. The cylinders 25a start discharging oil into the second hydraulic passage 36b in the position C4 and stop discharging oil in the position C6.

Working oil supplied under pressure from the hydraulic pump 20 through the second hydraulic passage 36b operates to move the pistons 47 forwardly out of the cylinders 24a. working oil discharged from the pistons 47 returns through the first hydraulic passage 36a to the hydraulic pump 20. Since the pistons 47 move while their ends are sliding against the swash plate 44, the cylinder block 45 is rotated to rotate the motor output shaft 43.

The rate at which the working oil discharged from the hydraulic pump 20 flows can be changed by varying the angle of inclination of the swash plate 24 for thereby varying the ratio between the rotational speeds of the pump drive shaft 23 and the motor output shaft 43.

As shown in FIG. 6, the pistons 27, 47 fitted in the respective cylinders 15a, 45a of the hydraulic pump 20 and the hydraulic motor 40 are resiliently urged to move forwardly out of the cylinders under the bias of springs 27b, 47b.

The piston 27 in the position C4 pushes back the swash plate 14 under a large force since the cylinder 24a housing that piston 27 communicates with one of the ports 35b and the pressure of oil in the cylinder 24a is high. The piston 27 in the position C4 also pushes the swash plate 24 under a large force since the cylinder 24a housing that piston 27 does not fully communicate with one of the ports 35a and the high oil pressure is kept in the cylinder 24.

Therefore, those pistons 27 subjected to a larger pressure and those pistons 27 subjected to a smaller pressure are positioned not horizontally symmetrically with respect to the vertical line ℓ, but symmetrically with respect to a straight line which is angularly displaced from the line ℓ by an angle α. The swash plate 24 undergoes a couple of forces tending to move the swash plate 24 into the neutral position in the counterclockwise direction in FIG. 6. Accordingly, the lever 24c places the link mechanism 9c under tension.

When the mowing machine runs on a flat surface, a pressure P1 in the first hydraulic passage 36a is lower than a pressure P2 in the second hydraulic passage 36b, as shown in FIG. 7. The couple of forces applied to the swash plate 24 and the tension acting on the link mechanism 9c are balanced, and the swash plate 24 is stably held in position, thus stabilizing the speed of travel of the mowing machine. When the mowing machine runs uphill, the load on the motor output shaft 43 is increased, and the pressure P2 in the second hydraulic passage 36b is increased to keep up with the increase in the load on the motor output shaft 43. The pressure applied to the swashplate 24 by the piston 27 in the position C6 is increased, so that the swash plate 24 is tilted more strongly toward the neutral position. rhe link mechanism 9c is thus strongly tensioned, and the swash plate 24 remains continuously stably held in position, with the result that the speed of travel of the mowing machine is stabilized.

When the mowing machine runs downhill, the motor output shaft 43 is forcibly driven by the road wheels 3. Therefore, the pressure P1 in the first hydraulic passage 36a becomes higher than the pressure P2 in the second hydraulic passage 36b, tending to tilt the swash plate 24 in a direction away from the neutral position. The link mechanism 9c is liable to be released from the tension, and the swash plate 24 tends to wobble within the play between itself and the link mechanism 9c.

At this time, the pusher rod 81 of the swash plate stabilizer 80 pushes back the swash plate 24 toward the neutral position and tensions the link mechanism 9c. Accordingly, the swash plate 24 is stably held in position, sand the speed of travel of the mowing machine remains stable.

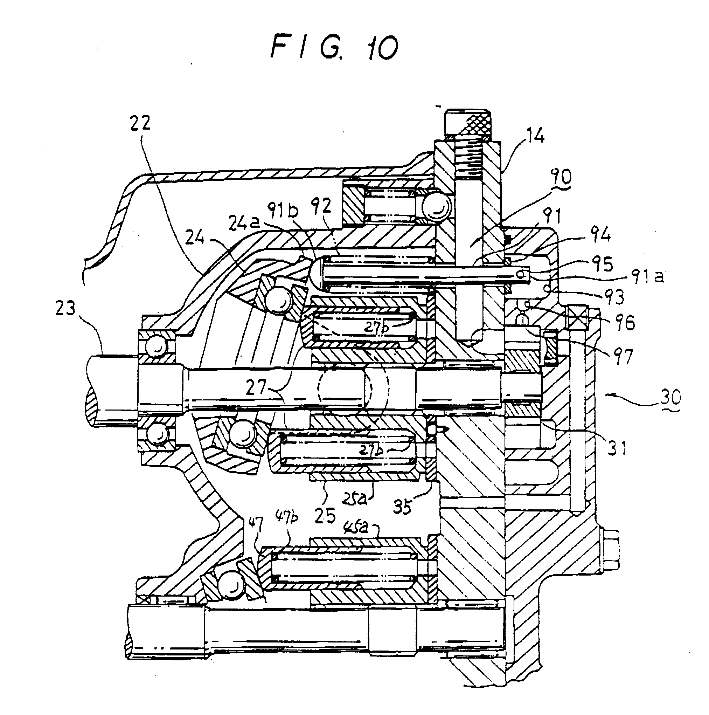

FIG. 10 shows another swash plate stabilizer. The swash plate stabilizer, generally denoted at 90, comprises a pusher rod 91 extending through the base plate 14 parallel to the pump drive shaft 23, a spring 92 for normally urging the pusher rod 91 toward the swash plate 24, and a hydraulic pressure chamber 93 housing the outer end 91a of the pusher rod 9a and supplied with the hydraulic pressure from the charging pump 30. The hydraulic pressure chamber 93 communicates with the charging pump 30 through a communication passage 96 having an orifice 97 which provides a damping effect on the pusher rod 91.

The inner end 91b of the pusher rod 91 is held in abutment against the upper edge 24a of the swash plate 24. The pusher rod 91 is stopped in its movement toward the swash plate 24 by a washer 93 and a pin 94 on the outer end 91a.

When the mowing machine with the swash plate stabilizer of FIG. 10 runs downhill, the swash plate 24 undergoes a couple of forces tending to move the swash plate 24 away from the neutral position as described above. However, the pusher rod 91 pushes back the swash plate 24 toward the neutral position. More specifically, the pusher rod 91 pushes back the swash plate 24 under the sum of the resilient force of the spring and the force produced as the product of the hydraulic pressure and the cross-sectional shape of the rod end 91a, so that the swash plate 24 is prevented from wobbling and the link mechanism 9c is kept under tension.

In FIGS. 6 and 10, when the swash plate 24 is in the neutral position, the ends 81b, 91b of the pusher rods 81, 91 are positioned out of contact with the swash plate 24, and do not impair the force to keep the swash plate 24 in the neutral position.

In the above embodiments, the awash plate stabilizer is associated with the hydraulic pump. However, the hydraulic motor may comprise a tiltable-swash-plate axial-piston motor, and the swash plate stabilizer may be associated with the swash plate of the motor.

with the present invention, as described above, the power transmission apparatus can easily be assembled and disassembled in a reduced number of steps since all major components are installed on a side surface (inner attachment surface) of the base plate. The transmission case is composed of the base plate and the casing covering the side surface of the base plate, and the hydraulic motor, the hydraulic pump, and the differential mechanism are mounted on the inner attachment surface of the base plate. Therefore, only the inner attachment surface is required to be machined highly accurately, whereas the other side surface may be machined with lower accuracy. Thus, the cost of manufacture of the power transmission apparatus can be lowered. since the hydraulic pump, the hydraulic motor, and the differential mechanism are disposed closely in the space in the transmission case, the power transmission apparatus is compact as a whole. The width of the power transmission apparatus across which the output shafts extend is reduced, so that the power transmission apparatus may be installed on a motor vehicle having a small tread.

The single cover which covers the other side surface (outer attachment surface) of the base plate serves as a housing of the charging pump and the broke mechanism and provides a seal for one of the output shafts. This arrangement also allows the power transmission apparatus to be assembled, disassembled, and reassembled easily, and also maintained and inspected efficiently.

The swash plate stabilizer is of a simple construction which includes a pusher rod for pushing back the tiltable swash plate toward the neutral position. The swash plate stabilizer is effective in preventing the swash plate from wobbling and stabilizing the speed of travel of the motor vehicle which incorporates the power transmission apparatus.

## Claims

1. A hydraulically operated power transmission apparatus (10) for transmitting the output power from a power source at a selected speed ratio, comprising:
a casing (13) having an opening in one end thereof;
a base plate (14) attached to said one end of said casing (13) in covering relation to said opening, said casing (13) and said base plate (14) jointly serving as a transmission case (15) defining a closed space (S) therein;
a hydraulic pump (20) having a pump drive shaft (23) adapted to be operatively coupled to the power source, said hydraulic pump (20) being disposed in said closed space (S); a hydraulic motor (40) having a motor output shaft (43) and drivable by a hydraulic pressure generated by said hydraulic pump (20), said hydraulic motor (40) being disposed in said closed space (S);
a pair of output shafts (12L, 12R) extending through said casing (13) and said base plate (14), respectively, and disposed coaxially with each other;
a differential mechanism (50) disposed in said closed space (S) and operable by said motor output shaft (43), said differential mechanism (50) being coupled to said output shafts (l2L, 12R); and
said hydraulic pump (20), said hydraulic motor (40), and said differential mechanism (50) being mounted on said base plate (14), said pump drive shaft (23), said motor output shaft (43), and said differential mechanism (50) having ends rotatably supported by said base plate (14) and opposite ends rotatably supported by said casing (13).

2. A hydraulically operated power transmission apparatus according to claim 1, further including a countershaft transmission mechanism (18) for transmitting rotation of said motor output shaft (43) to said differential mechanism (50), said countershaft transmission mechanism (18) being disposed between said motor output shaft (43) and said differential mechanism (50).

3. A hydraulically operated power transmission apparatus according to claim 2, wherein said countershaft transmission mechanism (18) comprises a speed reducer mechanism having a countershaft (60) rotatably supported by said base plate (14) and a train of speed reducer gears (61, 62) mounted on said countershaft (60) and operatively coupled to said motor output shaft (43) and said differential mechanism (50), respectively.

4. A hydraulically operated power transmission apparatus according to anyone of claims 1 to 3, further including an inner case (16) having an opening in one end thereof and covering said hydraulic pump (20) and said hydraulic motor (40), said one end of said inner case (16) being mounted on said base plate (14).

5. A hydraulically operated power transmission apparatus according to anyone of claims 1 to 4, further including an input shaft (11) having one end projecting from said transmission case (15) for receiving the output power from the drive source, and a direction changing mechanism (17) for transmitting rotation of said input shaft (11) to said pump drive shaft (23) while changing the direction of the rotation.

6. A hydraulically operated power transmission apparatus according to anyone of claims 1 to 5, wherein said pump drive shaft (23), said motor output shaft (43), and said output shafts (12L, 12R) lie perpendicularly to said base plate (14) and parallel to each other.

7. A hydraulically operated power transmission apparatus according to anyone of claims 1 to 6, wherein said base plate (14) has opposite attachment surfaces (14f, 14g) , said hydraulic pump (20) being mounted on one of said attachment surfaces (14f), said hydraulic motor (40) being mounted on said one attachment surface (14f), further including a countershaft (60) for transmitting rotation of said motor output shaft (43) to said differential mechanism (50), said countershaft (60) having one end rotatably supported by said base plate (14) and an opposite end rotatably supported by said casing (13), said counter shaft (60) being disposed between said motor output shaft (43) and said differential mechanism (50), and a brake mechanism (66) for braking either one of said countershaft (60) and said motor output shaft (43), said brake mechanism (66) being mounted on the other attachment (14g) surface of said base plate (14).

8. A hydraulically operated power transmission apparatus according to claim 7, further including a casing (13) having an opening in one end thereof and covering said hydraulic pump (20), said hydraulic motor (40), said countershaft (60), and said differential mechanism (50), said one end of said casing (13) being mounted on said one attachment surface (14f).

9. A hydraulically operated power transmission apparatus according to claim 8, wherein said pump drive shaft (23), said motor output shaft (43), said countershaft (60), and said differential mechanism (50) have opposite ends rotatably supported by said casing (13), further including output shafts (12L, 12R) extending through said base plate (14) and said casing (13), respectively, said differential mechanism (50) being coupled to said output shafts (12L, 12R).

10. A hydraulically operated power transmission apparatus according to anyone of claims 1 to 9, further including an oil charging pump (30) drivable by said pump drive shaft (23) for supplying working oil to said hydraulic pump (20), said oil charging pump (30) being mounted on an or said outer attachment surface (14g) of said base plate (14), and a cover (32, 70) mounted on said outer attachment surface (14g) and having a charging pump housing accommodating said oil charging pump (30) therein and an output shaft sealing member (78) through which one of said output shafts (12R) extends, said output shaft sealing member (78) providing a seal between said one output shaft (12R) and said base plate (14).

11. A hydraulically operated power transmission apparatus according to claim 10, further including a countershaft (60) for transmitting rotation of said motor output shaft (43) to said differential mechanism (50), said countershaft (60) being disposed between said motor output shaft (43) and said differential mechanism (50).

12. A hydraulically operated power transmission apparatus according to claim 11, further including a brake mechanism (66) for braking said countershaft (60), said brake mechanism (66) being mounted on said outer attachment surface (14g), said cover (70) having a brake housing (77) accommodating said brake mechanism (66) therein.

13. A hydraulically operated power transmission apparatus according to anyone of claims 1 to 12, wherein said hydraulic pump (20) comprises a cylinder block (25) rotatable with said pump drive shaft (23), a plurality of cylinders (25a) defined in said cylinder block (25) concentrically around said pump drive shaft (23), a swash plate (24) disposed for tilting movement with respect to said base plate (14), and a plurality of pistons (27) fitted respectively in said cylinders (25a) and reciprocally movable in slidable abutment against said swash plate (24), further including a swash plate stabilizer (80) for pushing back said swash plate (24) toward a neutral position.

14. A hydraulically operated power transmission apparatus according to claim 13, wherein said swash plate stabilizer (80) comprises a pusher rod (81) having an end (81b) engageable with said swash plate (24) and extending parallel to said rotatable shaft (23), said pusher rod (81) being axially movably supported by said base plate (14), a spring (82) for normally urging said pusher rod (81) toward said swash plate (24), and a stop member (84) attached to an opposite end (81a) of said pusher rod (81) for limiting axial movement of said pusher rod (81) toward said swash plate (24).

15. A hydraulically operated power transmission apparatus according to claim 14, further including an oil charging pump (30) drivable by said rotatable shaft (23) for supplying working oil to said cylinders (25a), said swash plate stabilizer (90) having a hydraulic pressure chamber (93) housing said opposite end (91a] of said pusher rod (91) for applying a hydraulic pressure produced by said oil charging pump (30) to said opposite end (91a) of said pusher rod (91).

## Patentansprüche

1. Eine hydraulisch betriebene Kraftübertragungsvorrichtung (10) zum Übertragen der Ausgangsleistung von einer Kraftquelle mit einem gewählten Übersetzungsverhältnis, mit:
einem Gehäuse (13), das an einem Ende eine Öffnung aufweist;
einer Grundplatte (14), die an dem einen Ende des Gehäuses (13), die Öffnung abdeckend, befestigt ist, wobei das Gehäuse (13) und die Grundplatte (14) gemeinsam als ein Übertragungsgehäuse (15) dienen, das einen geschlossenen Raum (S) definiert;
einer in dem geschlossenen Raum (S) angeordneten Hydropumpe (20), die eine Pumpenantriebswelle (23) aufweist, die so ausgebildet ist, daß sie mit der Kraftquelle in Antriebsverbindung steht;
einem in dem geschlossenen Raum (S) angeordneten Hydromotor (40), der eine Motorabtriebswelle (43) aufweist und durch einen von der Hydropumpe (20) erzeugten hydraulischen Druck antreibbar ist;
einem Paar Triebwellen (12L, 12R), die sich durch das Gehäuse (13) bzw. die Grundplatte (14) hindurcherstrecken und koaxial zueinander angeordnet sind;
einem Differentialgetriebe (50), das in dem geschlossenen Raum (S) angeordnet, durch die Motorabtriebswelle (43) antreibbar und mit den Triebwellen (12L, 12R) gekoppelt ist; und
wobei die Hydropumpe (20), der Hydromotor (40) sowie das Differentialgetriebe (50) an der Grundplatte (14) befestigt sind, und die Pumpenantriebswelle (23), die Motorabtriebswelle (43) sowie das Differentialgetriebe (50) durch die Grundplatte (14) drehbar abgestützte Enden und gegenüberliegende, durch das Gehäuse (13) drehbar abgestützte Enden aufweisen.

2. Eine hydraulisch betriebene Kraftübertragungsvorrichtung nach Anspruch 1, ferner mit einer Vorgelegewellen-Übertragungseinrichtung (18) zum Übertragen der Drehung der Motorabtriebswelle (43) auf das Differentialgetriebe (50), wobei die Vorgelegewellen-Übertragungseinrichtung (18) zwischen der Motorabtriebswelle (43) und dem Differentialgetriebe (50) angeordnet ist.

3. Eine hydraulisch betriebene Kraftübertragungsvorrichtung nach Anspruch 2, in welcher die Vorgelegewellen-Übertragungseinrichtung (18) ein Drehzahl-Reduktionsgetriebe mit einer drehbar durch die Grundplatte (14) abgestützten Vorgelegewelle (60) und einem Drehzahlreduktions-Räderwerk (61,62) umfaßt, das an der Vorgelegewelle (60) angebracht ist und in Antriebsverbindung mit der Motorabtriebswelle (43) bzw. dem Differentialgetriebe (50) steht.

4. Eine hydraulisch betriebene Kraftübertragungsvorrichtung nach einem der Ansprüche 1 bis 3, ferner mit einem Innengehäuse (16), das die Hydropumpe (20) sowie den Hydromotor (40) abdeckt und an einem Ende eine Öffnung aufweist, wobei dieses eine Ende des Innengehäuses (16) an der Grundplatte (14) befestigt ist.

5. Eine hydraulisch betriebene Kraftübertragungsvorrichtung nach einem der Ansprüche 1 bis 4, ferner mit einer Eingangswelle (11), die ein aus dem Übertragungsgehäuse (15) zwecks Aufnahme der Ausgangsleistung von der Antriebsquelle herausragendes Ende aufweist, und mit einem Richtungsänderungsgetriebe (17) zum Übertragen der Drehung der Eingangswelle (11) auf die Pumpenantriebswelle (23) bei gleichzeitiger Änderung der Drehrichtung.

6. Eine hydraulisch betriebene Kraftübertragungsvorrichtung nach einem der Ansprüche 1 bis 5, in welcher die Pumpenantriebswelle (23), die Motorabtriebswelle (43) und die Triebwellen (12L, 12R) senkrecht zur Grundplatte (14) und parallel zueinander angeordnet sind.

7. Eine hydraulisch betriebene Kraftübertragungsvorrichtung nach einem der Ansprüche 1 bis 6, in welcher die Grundplatte (14) gegenüberliegende Befestigungsflächen (14f, 14g) aufweist, die Hydropumpe (20) an einer der Befestigungsflächen (14f) befestigt ist, der Hydromotor (40) an dieser einen Befestigungsfläche (14f) befestigt ist, ferner eine Vorgelegewelle (60) zum Übertragen der Drehung der Motorabtriebswelle (43) auf das Differentialgetriebe (50) vorgesehen ist, die Vorgelegewelle (60) ein drehbar an der Grundplatte (14) abgestütztes Ende und ein gegenüberliegendes, durch das Gehäuse (13) drehbar abgestütztes Ende aufweist, die Vorgelegewelle (60) zwischen der Motorabtriebswelle (43) und dem Differentialgetriebe (50) angeordnet ist, und eine Brenseinrichtung (66) zum Bremsen der Vorgelegewelle (60) oder der Motorabtriebswelle (43) vorgesehen ist, wobei die Bremseinrichtung (66) an der anderen Befestigungsfläche (14g) der Grundplatte (14) befestigt ist.

8. Eine hydraulisch betriebene Kraftübertragungsvorrichtung nach Anspruch 7, ferner mit einem Gehäuse (13), das die Hydropumpe (20), den Hydromotor (40), die Vorgelegewelle (60) und das Differentialgetriebe (50) abdeckt und an einem Ende eine Öffnung aufweist, wobei dieses eine Ende des Gehäuses (13) an der einen Befestigungsfläche (14f) befestigt ist.

9. Eine hydraulisch betriebene Kraftübertragungsvorrichtung nach Anspruch 8, in welcher die Pumpenantriebswelle (23), die Motorabtriebswelle (43), die Vorgelegewelle (60) und das Differentialgetriebe (50) gegenüberliegende Enden aufweisen, die durch das Gehäuse (13) drehbar abgestützt sind, und wobei ferner Triebwellen (12L, 12R) vorgesehen sind, die sich durch die Grundplatte (14) bzw. das Gehäuse (13) hindurcherstrecken, wobei das Differentialgetriebe (50) mit den Triebwellen (12L, 12R) gekoppelt ist.

10. Eine hydraulisch betriebene Kraftübertragungsvorrichtung nach einem der Ansprüche 1 bis 9, ferner mit einer durch die Pumpenantriebswelle (23) antreibbaren Ölspeisepumpe (30) zur Zufuhr von Arbeitsöl zur Hydropumpe (20), wobei die Ölspeisepumpe (30) an einer oder der äußeren Befestigungsfläche (14g) der Grundplatte (14) befestigt ist, und mit einer Abdeckung (32, 70), die an der äußeren Befestigungsfläche (14g) befestigt ist und ein Speisepumpen-Gehäuse aufweist, in dem die Ölspeisepumpe (30) angeordnet ist, und mit einem Triebwellen-Dichtungselement (78), durch das sich eine der Triebwellen (12R) hindurcherstreckt, wobei das Triebwellen-Dichtungselement (78) eine Abdichtung zwischen der einen Triebwelle (12R) und der Grundplatte (14) herstellt.

11. Eine hydraulisch betriebene Kraftübertragungsvorrichtung nach Anspruch 10, ferner mit einer Vorgelegewelle (60) zum Übertragen der Drehung der Motorabtriebswelle (43) auf das Differentialgetriebe (50), wobei die Vorgelegewelle (60) zwischen der Motorabtriebswelle (43) und dem Differentialgetriebe (50) angeordnet ist.

12. Eine hydraulisch betriehene Kraftübertragungsvorrichtung nach Anspruch 11, ferner mit einer Bremseinrichtung (66) zum Bremsen der Vorgelegewelle (60), wobei die Bremseinrichtung (66) an der äußeren Befestigungsfläche (14g) befestigt ist und die Abdeckung (70) ein Bremsgehäuse (77) umfaßt, in dem die Bremseinrichtung (66) angeordnet ist.

13. Eine hydraulisch betriebene Kraftübertragungsvorrichtung nach einem der Ansprüche 1 bis 12, in welcher die Hydropumpe (20) einen mit der Pumpenantriebswelle (23) drehbaren Zylinderblock (25), mehrere im Zylinderblock (25) konzentrisch um die Pumpenantriebswelle (23) herum definierte Zylinder (25a), eine relativ zur Grundplatte (14) schwenkbar angeordnete Schiefscheibe (24) und mehrere Kolben (27) umfaßt, die einzeln in den Zylindern (25a) angeordnet und, an der Schiefscheibe (24) gleitend anliegend, hin- und herbewegbar sind, und in welcher ferner ein Schiefscheibenstabilisator (80) zum Zurückschieben der Schiefscheibe (24) in Richtung einer Neutralstellung vorgesehen ist.

14. Eine hydraulisch betriebene Kraftübertragungsvorrichtung nach Anspruch 13, in welcher der Schiefscheibenstabilisator (80) einen sich parallel zur drehbaren Welle (23) erstreckenden und durch die Grundplatte (14) axial beweglich abgestützten Stößel (81) mit einem mit der Schiefscheibe (24) in Eingriff bringbaren Ende (81b), eine den Stößel (81) normalerweise in Richtung der Schiefscheibe (24) beaufschlagende Feder (82) und ein Anschlagelement (84) umfaßt, das zwecks Begrenzung der Axialbewegung des Stößels (81) in Richtung der Schiefscheibe (24) an einem gegenüberliegenden Ende (81a) des Stößels (81) angebracht ist.

15. Eine hydraulisch betriebene Kraftübertragungsvorrichtung nach Anspruch 14, ferner mit einer von der drehbaren Welle (23) antreibbaren Ölspeisepumpe (30) zur Zufuhr von Arbeitsöl zu den Zylindern (25a), wobei der Schiefscheibenstabilisator (90) eine das gegenüberliegende Ende (91a) des Stößels (91) aufnehmende hydraulische Druckkammer (93) zur Beaufschlagung des gegenüberliegenden Endes (91a) des Stößels (91) mit einem von der Ölspeisepumpe (30) erzeugten hydraulischen Druck umfaßt.

## Revendications

1. Appareil de transmission de puissance (10) fonctionnant hydrauliquement pour transmettre la puissance de sortie d'une source de puissance sous un rapport de vitesses choisi, comprenant :
- un carter (13) ayant une ouverture à une de ses extrémités;
- une plaque de base (14) attachée à ladite extrémité du carter (13) en recouvrant ladite ouverture, ledit carter (13) et ladite plaque de base (14) servant conjointement en tant que boîtier de transmission (15) délimitant un espace clos (S) dans celui-ci;
- une pompe hydraulique (20) ayant un arbre d'entraînement (23) adapté pour être couplé opératoirement à la source de puissance, ladite pompe hydraulique (20) étant disposée dans ledit espace clos (S);
- un moteur hydraulique (40) ayant un arbre de sortie (43) et pouvant être entraîné par une pression hydraulique produite par ladite pompe hydraulique (20), ce moteur hydraulique (40) étant disposé dans ledit espace clos (S);
- une paire d'abres de sortie (12L, 12R) s'étendant à travers ledit carter (13) et ladite plaque de base (14), respectivement, et disposés coaxialement l'un à l'autre;
- un mécanisme différentiel (50) disposé dans ledit espace clos (S) et opérable par ledit arbre de sortie (43) du moteur, ce mécanisme différentiel (50) étant couplé auxdits arbres de sortie (12L, 12R); et
- ladite pompe hydraulique (20), ledit moteur hydraulique (40) et ledit mécanisme différentiel (50) étant montés sur ladite plaque de base (14), ledit arbre (23) d'entraînement de la pompe, ledit arbre de sortie (43) du moteur et ledit mécanisme différentiel (50) ayant des extrémités supportées rotativement par ladite plaque de base (14) et des extrémités opposées supportées rotativemant par ledit carter (13).

2. Appareil de transmission de puissance fonctionnant hydrauliquement selon la revendication 1, comprenant en outre un mécanisme de transmission (18) à arbre de renvoi pour transmettre la rotation dudit arbre de sortie (43) du moteur audit mécanisme différentiel (50), ledit mécanisme de transmission (18) à arbre de renvoi étant disposé entre ledit arbre de sortie (43) du moteur et ledit mécanisme différentiel (50).

3. Appareil de transmission de puissance fonctionnant hydrauliquement selon la revendication 2, dans lequel ledit mécanisme de transmission (18) à arbre de renvoi comprend un mécanisme réducteur de vitesse ayant un arbre de renvoi (60) soutenu rotativement par ladite plaque de base (14) et un train d'engrenages réducteurs de vitesse (61, 62) montés sur ledit arbre de renvoi (60) et couplés opératoirement audit arbre de sortie (43) du moteur et audit mécanisme différentiel (50), respectivement.

4. Appareil de transmission de puissance fonctionnant hydrauliquement selon l'une quelconque des revendications 1 à 3, comprenant en outre un boîtier intérieur (16) ayant une ouverture dans une de ses extrémités et couvrant ladite pompe hydraulique (20) et ledit moteur hydraulique (40), ladite extrémité de ce boîtier intérieur (16) étant montée sur ladite plaque de base (14).

5. Appareil de transmission de puissance fonctionnant hydrauliquement selon l'une quelconque des revendications 1 à 4, comprenant en outre un arbre d'entrée (11) ayant une extrémité dépassant hors dudit boîtier de transmission (15) pour recevoir la puissance de sortie de la source d'entraînement, et un mécanisme (17) de changement de sens pour transmettre la rotation dudit arbre d'entrée (11) audit arbre d¹entraînement (23) de la pompe, tout en changeant le sens de la rotation.

6. Appareil de transmission de puissance fonctionnant hydrauliquement selon l'une quelconque des revendications 1 à 5, dans lequel ledit arbre d'entraînement (23) de la pompe, ledit arbre de sortie (43) du moteur, et lesdits arbres de sortie (12L, 12R) sont perpendiculaires à ladite plaque de base (14) et parallèles entre eux.

7. Appareil de transmission de puissance fonctionnant hydrauliquement selon l'une quelconque des revendications 1 à 6, dans lequel ladite plaque de base (14) a des surfaces d'attachement opposées (14f, 14g), ladite pompe hydraulique (20) étant montée sur une (14f) desdites surfaces d'attachement, ledit moteur hydraulique (40) étant monté sur ladite surface d'attachement (14f), comprenant en outre un arbre de renvoi (60) pour transmettre la rotation dudit arbre de sortie (43) du moteur audit mécanisme différentiel (50), ledit arbre de renvoi (60) ayant une extrémité supportée rotativement par ladite plaque de base (14) et une extrémité opposée supportée rotativement par ledit carter (13), ledit arbre de renvoi (60) étant disposé entre ledit arbre de sortie (43) du moteur et ledit mécanisme différentiel (50), et un mécanisme de frein (66) pour freiner l'un ou l'autre dudit arbre de renvoi (60) et dudit arbre de sortie (43) du moteur, ledit mécanisme de frein (66) étant monté sur l'autre surface d'attachement (14g) de ladite plaque de base (14).

8. Appareil de transmission de puissance fonctionnant hydrauliquement selon la revendication 7, comprenant en outre un carter (13) ayant une ouverture dans une des ses extrémités et couvrant ladite pompe hydraulique (20), ledit moteur hydraulique (40) et ledit mécanisme différentiel (50), ladite extrémité dudit carter (13) étant montée sur ladite surface d'attachement (14f).

9. Appareil de transmission de puissance fonctionnant hydrauliquement selon la revendication 8, dans lequel ledit arbre d'entraînement (23) de la pompe, ledit arbre de sortie (43) du moteur, ledit arbre de renvoi (60) et ledit mécanisme différentiel (50) ont des extrémités opposées supportées rotativement par ledit carter (13), comprenant en outre des arbres de sortie (12L, 12R) s'étendant à travers ladite plaque de base (14) et ledit carter (13), respectivement, ledit mécanisme différentiel (50) étant couplé auxdits arbres de sortie (12L, 12R).

10. Appareil de transmission de puissance fonctionnant hydrauliquement selon l'une quelconque des revendications 1 à 9, comprenant en outre une pompe à huile de charge (30) pouvant être entraînée par ledit arbre d'entraînement (23) de la pompe pour fournir de l'huile de travail à ladite pompe hydraulique (20), ladite pompe à huile de charge (30) étant montée sur une surface d'attachement ou sur ladite surface d'attachement extérieure (14g) de ladite plaque de base (14), et un couvercle (32, 70) monté sur ladite surface d'attachement extérieure (14g) et ayant un logement de pompe de charge recevant ladite pompe à huile de charge (30) et un organe d'étanchéité (78) d'arbre de sortie, à travers lequel s'étend un (12R) desdits arbres de sortie, ledit organe d'étanchéité (78) d'arbre de sortie formant un joint étanche entre ledit arbre de sortie (12R) et ladite plaque de base (14).

11. Appareil de transmission de puissance fonctionnant hydrauliquement selon la revendication 10, comprenant en outre un arbre de renvoi (60) pour transmettre la rotation dudit arbre de sortie (43) du moteur audit mécanisme différentiel (50), ledit arbre de renvoi (60) étant disposé entre ledit arbre de sortie (43) du moteur et ledit mécanisme différentiel (50).

12. Appareil de transmission de puissance fonctionnant hydrauliquement selon la revendication 11, comprenant en outre un mécanisme de frein (66) pour freiner ledit arbre de renvoi (60), ledit mécanisme de frein (66) étant monté sur ladite surface d'attachement extérieure (14g),ledit couvercle (70) ayant un logement de frein (77) pour ledit mécanisme de frein (66).

13. Appareil de transmission de puissance fonctionnant hydrauliquement selon l'une quelconque des revendications 1 à 12, dans lequel ladite pompe hydraulique (20) comprend un bloc à cylindres (25) rotatif avec ledit arbre d'entraînement (23) de la pompe, une pluralité de cylindres (25a) ménagés dans ledit bloc à cylindres (25) concentriquement autour dudit arbre d'entraînement (23) de la pompe, un plateau oscillant (24) disposé pour un mouvement d'inclinaison par rapport à ladite plaque de base (14), et une pluralité de pistons (27) ajustés respectivement dans lesdits cylindres (25a) et mobiles selon un mouvement alternatif en butant de manière glissante contre ledit plateau oscillant (24), comprenant en outre un stabilisateur (80) du plateau oscillant pour repousser ledit plateau oscillant (24) vers une position neutre.

14. Appareil de transmission de puissance fonctionnant hydrauliquement selon la revendication 13, dans lequel ledit stabilisateur (80) du plateau oscillant comprend un poussoir (81) ayant une extrémité (81b) pouvant s'engager contre ledit plateau oscillant (24) et s'étendant parallèlement audit arbre rotatif (23), ledit poussoir (81) étant mobile axialement en étant supporté par ladite plaque de base (14), un ressort (82) pour pousser normalement ledit poussoir (81) vers ledit plateau oscillant (24), et un organe de butée (84) attaché à une extrémité opposée (81a) dudit poussoir (81) pour limiter le mouvement axial dudit poussoir (81) vers ledit plateau oscillant (24).

15. Appareil de transmission de puissance fonctionnant hydrauliquement selon la revendication 14, comprenant en outre une pompe à huile de charge (30) pouvant être entraînée par ledit arbre rotatif (23) pour fournir de l'huile de travail auxdits cylindres (25a), ledit stabilisateur (90) du plateau oscillant ayant une chambre de pression hydraulique (93) logeant ladite extrémité opposée (91a) dudit poussoir (91) pour appliquer une pression hydraulique produite par ladite pompe à huile de charge (30) sur ladite extrémité opposée (91a) dudit poussoir (91).
